# EUROPEAN PATENT APPLICATION

(11) **EP 4 191 519 A1**
(43) Date of publication of application: **07.06.2023**
(21) Application number: 20946647.3
(22) Date of filing: 28.07.2020
(51) Int. Cl.: G06T 7/00, G06T 7/20

(54) **EVALUATION METHOD, INFORMATION PROCESSING DEVICE, AND EVALUATION PROGRAM**

(71) Applicant: FUJITSU LIMITED, Kawasaki-shi, Kanagawa 211-8588 (JP)
(72) Inventor: ABE, Narishige, Kawasaki-shi, Kanagawa 211-8588 (JP)
(74) Representative: Hoffmann Eitle
(86) International application number: PCT/JP2020/028901
(87) International publication number: WO 2022/024222

(57) **Abstract**

A computer acquires image data including a target object captured by a camera. The computer detects motions at each of a plurality of positions on a subject including the target object captured by the camera, based on the acquired image data. The computer specifies a plurality of the positions where magnitude of the detected motions is greater than a reference value, from among the plurality of positions on the subject. The computer performs evaluation as to the target object captured by the camera, based on distribution of the specified plurality of the positions on the image data. As a result, highly accurate forgery determination is enabled.

## Description

### FIELD

The present invention relates to an evaluation method, an information processing device, and an evaluation program.

### BACKGROUND

For example, a system capable of implementing face authentication using an image captured by a commonly spread camera has been widely spread. However, in recent years, face images of other people can be easily obtained, for example, through a social networking service (SNS) or the like. As a result, attacks using forged images are widely known, such as performing face authentication using face images of other people.

Thus, there is also known a technique for finding a forged image from a moire pattern generated by different reflection characteristics between a forged image of the face image of another person and an actual image.

### CITATION LIST

### PATENT DOCUMENT

Patent Document 1: Japanese Laid-open Patent Publication No. 2006-190259
Patent Document 2: Japanese Laid-open Patent Publication No. 2006-133945
Patent Document 3: Japanese Laid-open Patent Publication No. 2018-36965

### NON-PATENT DOCUMENT

Non-Patent Document 1: Diago Caetano Garcia et al., "Face-Spoofing 2D-Detection Based on Moire-pattern Analysis", IEEE TRANSACTIONS ON INFORMATION FORENSICS AND SECURITY, VOL. 10, NO. 4, APRIL 2015.

### SUMMARY

### [TECHNICAL PROBLEM]

However, for example, when an image captured with high image quality and presented on a high-brightness and high-resolution display is captured by a general web camera, it is difficult to identify the captured image as a forged image (forgery).

One aspect is to provide an evaluation method, an information processing device, and an evaluation program that enable highly accurate forgery determination.

### [SOLUTION TO PROBLEM]

In one mode, as an evaluation method, a computer acquires image data including a target object captured by a camera. The computer detects motions at each of a plurality of positions on a subject including the target object captured by the camera, based on the acquired image data. The computer specifies a plurality of the positions where magnitude of the detected motions is greater than a reference value, from among the plurality of positions on the subject. The computer performs evaluation as to the target object captured by the camera, based on distribution of the specified plurality of the positions on the image data.

According to an aspect of the embodiments, an evaluation method executed by a computer, the evaluation method includes acquiring image data that includes a target object captured by a camera; detecting motions at each of a plurality of positions on a subject that includes the target object captured by the camera, based on the acquired image data; specifying a plurality of the positions where magnitude of the detected motions is greater than a reference value, from among the plurality of positions on the subject; and performing evaluation as to the target object captured by the camera, based on distribution of the specified plurality of the positions on the image data.

### [ADVANTAGEOUS EFFECTS OF INVENTION]

As one aspect, highly accurate forgery determination is enabled.

### BRIEF DESCRIPTION OF DRAWINGS

FIG. 1 is an explanatory diagram illustrating an example of the configuration of an evaluation device according to a first embodiment;
FIG. 2 is an explanatory diagram illustrating an example of moving straight lines on a target object image;
FIG. 3 is an explanatory diagram illustrating an example of a process of detecting the moving straight lines on the target object image;
FIG. 4 is an explanatory diagram illustrating an example of a process of specifying the moving straight lines on the target object image;
FIG. 5 is a flowchart illustrating an example of a processing action of a central processing unit (CPU) in the evaluation device relating to a first evaluation process;
FIG. 6 is an explanatory diagram illustrating an example of the configuration of an evaluation device according to a second embodiment;
FIG. 7 is an explanatory diagram illustrating an example of a process from detection to specification of the moving straight lines on the target object image;
FIG. 8 is a flowchart illustrating an example of a processing action of a CPU in the evaluation device relating to a second evaluation process; and
FIG. 9 is an explanatory diagram illustrating an example of a computer that executes an evaluation program.

### DESCRIPTION OF EMBODIMENTS

Hereinafter, embodiments of an evaluation device and the like disclosed in the present application will be described in detail with reference to the drawings. Note that the present embodiments do not limit the disclosed technique. In addition, each embodiment described below may be combined as appropriate unless otherwise contradicted.

### [First Embodiment]

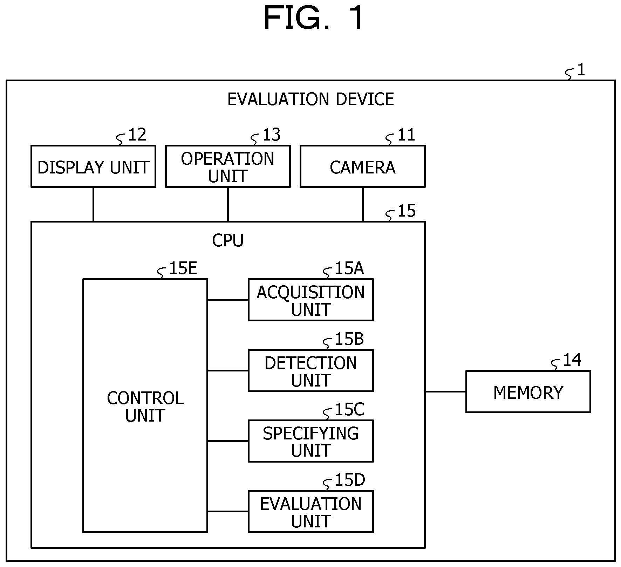

FIG. 1 is an explanatory diagram illustrating an example of the configuration of an evaluation device 1 according to a first embodiment. The evaluation device 1 illustrated in FIG. 1 is a device that evaluates whether or not a target object image captured when, for example, used for biometric authentication is forged. The evaluation device 1 includes a camera 11, a display unit 12, an operation unit 13, a memory 14, and a central processing unit (CPU) 15. The camera 11 is, for example, an input interface that captures a subject. For example, the camera 11 is a web camera, an infrared (IR) camera, a depth camera, or the like. The display unit 12 is an output interface such as a display device that displays various sorts of information. The operation unit 13 is, for example, an input interface for inputting commands and the like. The memory 14 is, for example, a semiconductor memory element such as a read only memory (ROM), a random access memory (RAM), or a flash memory, or a storage device such as a hard disk drive (HDD) or an optical disc that stores various sorts of information. The CPU 15 is an electronic circuit that controls the evaluation device 1 as a whole.

The CPU 15 loads, for example, a program stored in the ROM into the RAM. The CPU 15 functions as, for example, an acquisition unit 15A, a detection unit 15B, a specifying unit 15C, an evaluation unit 15D, and a control unit 15E by executing a program loaded into the RAM as processes.

The acquisition unit 15A acquires image data including a target object captured by the camera 11. The detection unit 15B detects motions at each of a plurality of positions on a subject including the target object captured by the camera 11, based on consecutive preceding and succeeding pieces of the acquired image data. That is, the detection unit 15B detects moving straight lines, which are motion vectors, as motions at each of a plurality of positions on a target object image of the subject including the target object. Note that, when the target object is assumed as a face image, the target object is, for example, a real face captured by the camera 11 or a face displayed on another terminal. The subject is all things appearing in the target object image, such as the face image, a background image, a smartphone frame image as examples.

The specifying unit 15C specifies a plurality of positions where the magnitude of the detected motions is greater than a reference value, from among the plurality of positions on the subject. That is, the specifying unit 15C specifies a plurality of moving straight lines in which the magnitude of the detected moving straight lines is greater than the reference value. Furthermore, the specifying unit 15C specifies a plurality of moving straight lines in which the difference in a motion direction between adjacent moving straight lines is less than a predetermined value. The specifying unit 15C calculates the distribution of the specified moving straight lines on the target object image.

The evaluation unit 15D performs evaluation as to the target object captured by the camera 11, based on the distribution of the specified plurality of positions on the image data. That is, the evaluation unit 15D determines whether or not the target object image captured by the camera 11 is the real object, based on a target area of the distribution of the specified plurality of moving straight lines. Note that the target object is, for example, a biometric target such as a face image, a vein image, or an iris image. The control unit 15E controls the CPU 15 as a whole. The control unit 15E executes biometric authentication such as face authentication, vein authentication, or iris authentication.

When the preceding and succeeding target object images are actual images, the target object images demonstrate natural and complex motions of a person. On the other hand, when the preceding and succeeding target object images are images of a forgery, the target object images will have moving straight lines due to simple linear motions caused by camera shake that occurs when, for example, holding a high-image quality display over the camera 11. Focusing on this point, whether or not the target object image is a forgery is determined using the distribution of the moving straight lines on the target object image.

The evaluation device 1 detects the moving straight lines instead of mere straight lines on the target object image. When a mere straight line is detected, a straight line contained in the background of the target object image has influence, and accordingly, when there are many straight lines in the background, there is a possibility that the target object image may be determined to be a forgery. In other words, even if the target object image is not a forgery, the target object image will be determined to be a forgery. Thus, the evaluation device 1 detects the moving straight lines instead of mere straight lines on the target object image to evaluate the target object image based on the distribution of the moving straight lines on the target object image. As a result, even when many straight lines are included in the background, highly accurate forgery determination is enabled.

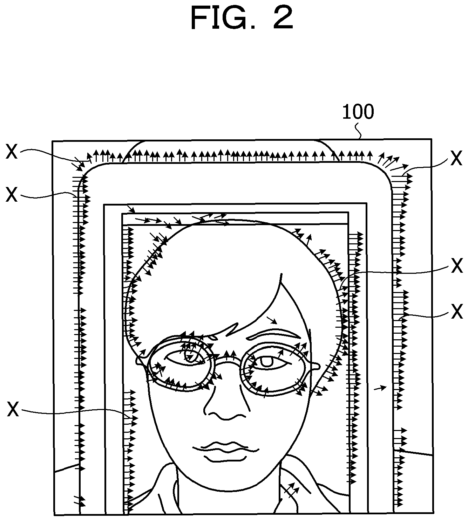

FIG. 2 is an explanatory diagram illustrating an example of moving straight lines X on a target object image 100. The target object image 100 is an image captured by the camera 11 of the evaluation device 1. Note that the target object image 100 illustrated in FIG. 2 is, for example, an image including an image of a forgery obtained by an attacker displaying the face image of a legitimate user on the display of a tablet terminal. The actual image is, for example, the actual face image of the legitimate user captured by the camera 11. When the image displayed on the display is captured by the camera 11, the camera shake in the display will produce the moving straight lines X at each position on preceding and succeeding captured images obtained by consecutively capturing.

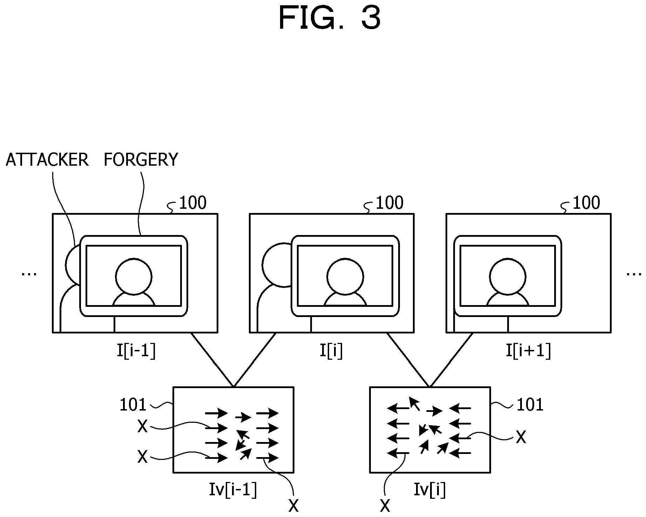

FIG. 3 is an explanatory diagram illustrating an example of a process of detecting the moving straight lines X on the target object image 100. For example, the detection unit 15B quantifies motions at each of a plurality of positions on the consecutive preceding and succeeding target object images 100, using an optical flow that quantifies a motion of an object between adjacent frames produced by the movement of the object or the camera 11, to detect the moving straight lines X at each position.

The target object images 100 illustrated in FIG. 3 are, for example, three consecutive images obtained by an attacker capturing a forgery with the camera 11. The detection unit 15B compares the target object image 100 of I(i-1) with the following target object image 100 of I(i) to detect a moving straight line group including the moving straight lines X at each position. Then, the detection unit 15B detects a target object image 101 of Iv(i-1) including the moving straight line group. In addition, the detection unit 15B compares the target object image 100 of I(i) with the following target object image 100 of I(i+1) to detect a moving straight line group including the moving straight lines X at each position. Then, the detection unit 15B detects a target object image 101 of Iv(i) including the moving straight line group.

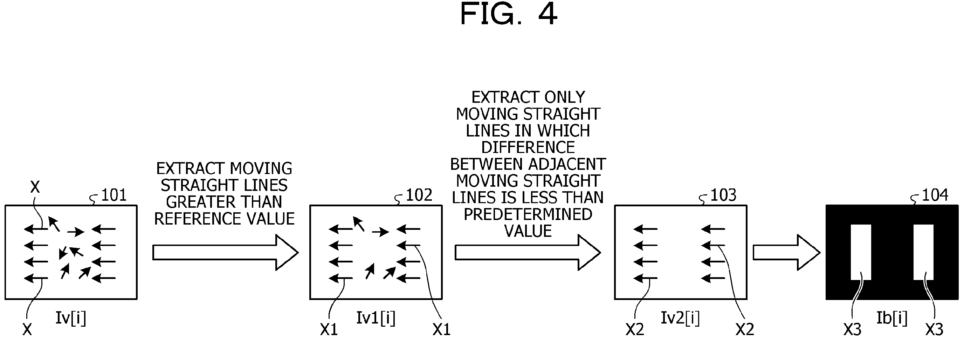

FIG. 4 is an explanatory diagram illustrating an example of a process of specifying the moving straight lines X on the target object image 100. The specifying unit 15C specifies moving straight lines X1 greater than the reference value, from among the moving straight lines X at each position on the target object image 101 of Iv(i) detected by the detection unit 15B. Furthermore, the specifying unit 15C specifies moving straight lines X2 in which the difference in the motion direction between the adjacent moving straight lines X1 is less than a predetermined value, for example, moving straight lines X2 in the same direction, from among the specified moving straight lines X1 on a target object image 102 of Iv1(i). Additionally, the specifying unit 15C performs binarization conversion such that the region of the specified moving straight lines X2 on a target object image 103 of Iv2(i) is assigned as "1" and the region other than the region of "1" on the target object image 103 is assigned as "0", to obtain a target object image 104 of Ib(i) after the binarization conversion. Note that, in the target object image 104 of Ib(i) illustrated in FIG. 4, the regions X3 of "1" are expressed in white, and the region of "0" is expressed in black. Since the camera shake can be seen as a linear action in a unit time, the wider the regions X3 of the moving straight lines X2 in the target object image 104, the more likely the target object image can be determined to be a forgery.

Then, the evaluation unit 15D calculates the target area of the regions X3 of "1" in the target object image 104 of Ib(i) and compares the target area of the regions X3 of "1" and the total area of the target object image 104 of Ib(i). The evaluation unit 15D verifies the target object image 100 to be a forgery when the target area of the regions X3 of "1" is equal to or greater than a threshold value, for example, a predetermined ratio. In addition, the evaluation unit 15D verifies the target object image 100 to be the real object when the area of the regions X3 of "1" is less than the predetermined ratio.

When it is verified that the target object image 100 is a forgery, the control unit 15E displays a warning on the display unit 12 without executing face authentication with the target object image 100. When it is verified that the target object image 100 is the real object, the control unit 15E starts face authentication with the target object image 100.

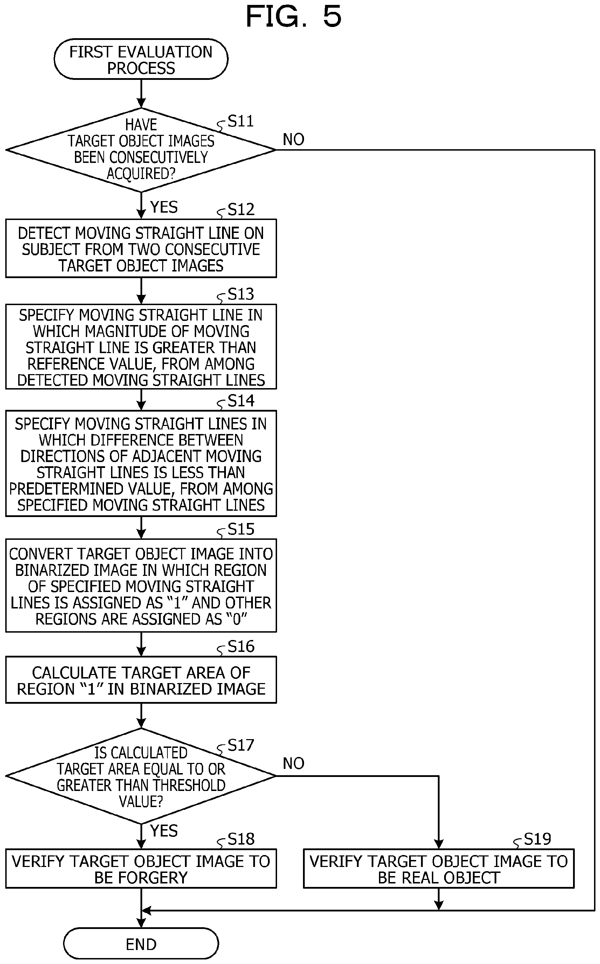

FIG. 5 is a flowchart illustrating an example of a processing action of the CPU 15 in the evaluation device 1 relating to a first evaluation process. In FIG. 5, the acquisition unit 15A in the CPU 15 determines whether or not the target object images 100 have been consecutively acquired (step S11). When the target object images 100 have been consecutively acquired (step S11: Yes), the detection unit 15B in the CPU 15 detects the moving straight line X on the subject from two consecutive target object images 100 (step S12).

The specifying unit 15C in the CPU 15 specifies the moving straight line X1 in which the magnitude of the moving straight line X is greater than the reference value, from among the detected moving straight lines X (step S13). Furthermore, the specifying unit 15C specifies the moving straight lines X2 in which the difference between the directions of the adjacent moving straight lines X is less than a predetermined value, from among the specified moving straight lines X1 (step S14).

Then, the specifying unit 15C converts the target object image 103 into a binarized image in which the region X3 of the moving straight lines X2 specified in step S14 is assigned as "1" and the other regions are assigned as "0" (step S15). The specifying unit 15C calculates the target area of the region X3 of "1" in the target object image 104 after the binarization conversion (step S16).

The evaluation unit 15D in the CPU 15 determines whether or not the target area of the region X3 is equal to or greater than the threshold value (step S17). When the target area is equal to or greater than the threshold value (step S17: Yes), the evaluation unit 15D determines that the target object image 100 is a forgery (step S18) and terminates the processing action illustrated in FIG. 5.

When the target area is not equal to or greater than the threshold value (step S17: No), the evaluation unit 15D determines that the target object image 100 is the real object (step S19) and terminates the processing action illustrated in FIG. 5. Then, when the target object image 100 is verified to be the real object, the control unit 15E in the CPU 15 will start biometric authentication using the target object on the target object image 100. When the target object images 100 have not been consecutively acquired (step S11: No), the acquisition unit 15A terminates the processing action illustrated in FIG. 5.

The evaluation device 1 detects the moving straight lines X at each position on the subject from the consecutive preceding and succeeding target object images 100 and specifies the moving straight lines X2 of which the magnitude is greater than the reference value and in which the difference between the directions of the adjacent moving straight lines X is less than a predetermined value, from among the detected moving straight lines X. The evaluation device 1 binarizes the distribution of the specified moving straight lines X2 and verifies the target object image 100 to be a forgery when the target area of the region X3 of the moving straight lines X2 in the target object image 100 is equal to or greater than the threshold value. Furthermore, when the target area of the region X3 of the moving straight lines X2 in the target object image 100 is less than the threshold value, the evaluation device 1 verifies the target object image 100 to be the real object. As a result, highly accurate forgery determination is enabled even when the background includes many straight lines. In addition, for example, when an image captured with high image quality and presented on a high-brightness and high-resolution display is captured by the camera 11, the captured target object image 100 may be identified as a forgery.

Since the evaluation device 1 does not involve an intentional operation as in performing biometric sensing from the determination result as to whether or not the terminal has been correctly moved in challenge and response as conventionally performed for a legitimate user, the operation burden on the legitimate user may be reduced.

Note that the case where the evaluation device 1 of the first embodiment binarizes the distribution of the specified moving straight lines X and, when the target area of the region X3 of the moving straight lines X2 in the target object image 100 is equal to or greater than the threshold value, verifies the target object image 100 to be a forgery has been taken as an example. However, besides the target area of the distribution of the specified moving straight lines X, whether or not the target object image 100 is a forgery may be determined, for example, based on the number of specified moving straight lines X in the target object image 100, and an embodiment thereof will be described below as a second embodiment.

### [Second Embodiment]

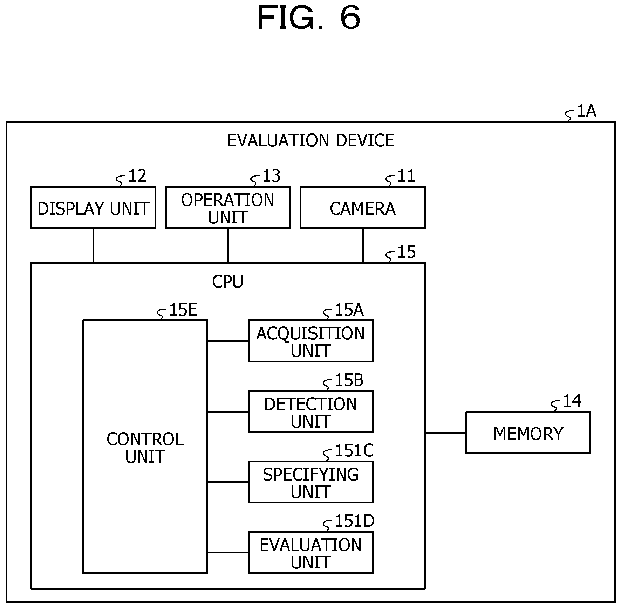

FIG. 6 is an explanatory diagram illustrating an example of the configuration of an evaluation device 1A according to the second embodiment. Note that the same reference signs are given to the same components as those of the evaluation device 1 of the first embodiment, and redundant description of these components and actions will be omitted.

A CPU 15 in the evaluation device 1A illustrated in FIG. 6 includes a specifying unit 151C and an evaluation unit 151D, as well as an acquisition unit 15A, a detection unit 15B, and a control unit 15E. The specifying unit 151C specifies a plurality of moving straight lines X2 in which the magnitude of the detected moving straight line X is greater than a reference value and the difference in a motion direction between the adjacent moving straight lines X is less than a predetermined value. The specifying unit 151C estimates the plurality of moving straight lines X2 specified on the target object image 100 as straight lines. The specifying unit 151C calculates the number of moving straight lines X4 as a result of straight line estimation on the target object image 100.

The evaluation unit 151D determines whether or not the number of moving straight lines X4 on the target object image 100 is equal to or greater than a threshold number. The evaluation unit 151D determines that the target object image 100 is a forgery when the number of moving straight lines X4 is equal to or greater than the threshold number. The evaluation unit 151D determines that the target object image 100 is the real object when the number of moving straight lines X4 is less than the threshold number.

When it is verified that the target object image 100 is a forgery, the control unit 15E displays a warning on the display unit 12 without executing face authentication with the target object image 100. When it is verified that the target object image 100 is the real object, the control unit 15E starts face authentication with the target object image 100.

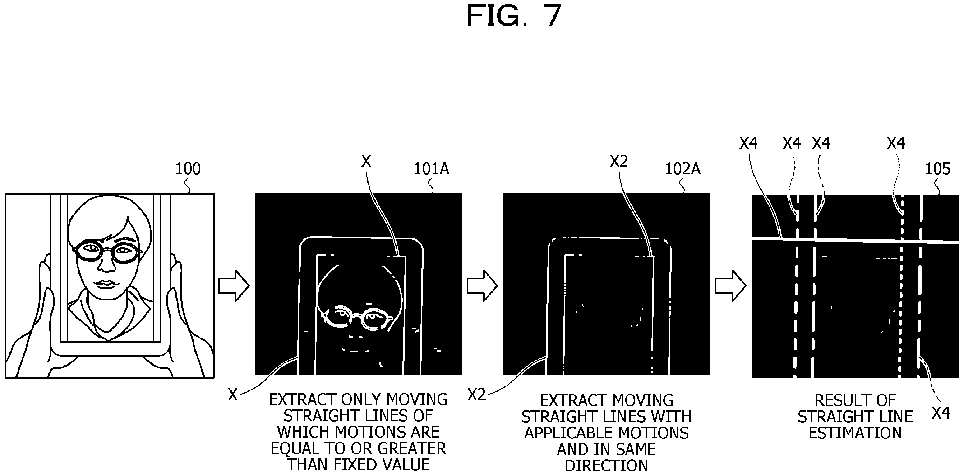

FIG. 7 is an explanatory diagram illustrating an example of a process from detection to specification of the moving straight lines X on the target object image 100. The detection unit 15B detects the moving straight lines X at each position from the consecutive preceding and succeeding target object images 100. The specifying unit 151C specifies moving straight lines X1 greater than the reference value, from among the moving straight lines X at each position on a target object image 101A of Iv11(i) detected by the detection unit 15B. Furthermore, the specifying unit 151C specifies moving straight lines X2 in which the difference in the motion direction between the adjacent moving straight lines X is less than a predetermined value, from among the specified moving straight lines X1 on a target object image 102A of Iv12(i). The specifying unit 151C estimates a straight line from the moving straight line X2 on the target object image 102A and acquires the number (five) of the moving straight lines X4 estimated as straight lines on a target object image 105.

The evaluation unit 151D determines whether or not the number of moving straight lines X4 on the target object image 105 is equal to or greater than the threshold value. The evaluation unit 151D determines that the target object image 100 is a forgery when the number of moving straight lines X4 is equal to or greater than the threshold number. The evaluation unit 151D determines that the target object image 100 is the real object when the number of moving straight lines X4 is less than the threshold number.

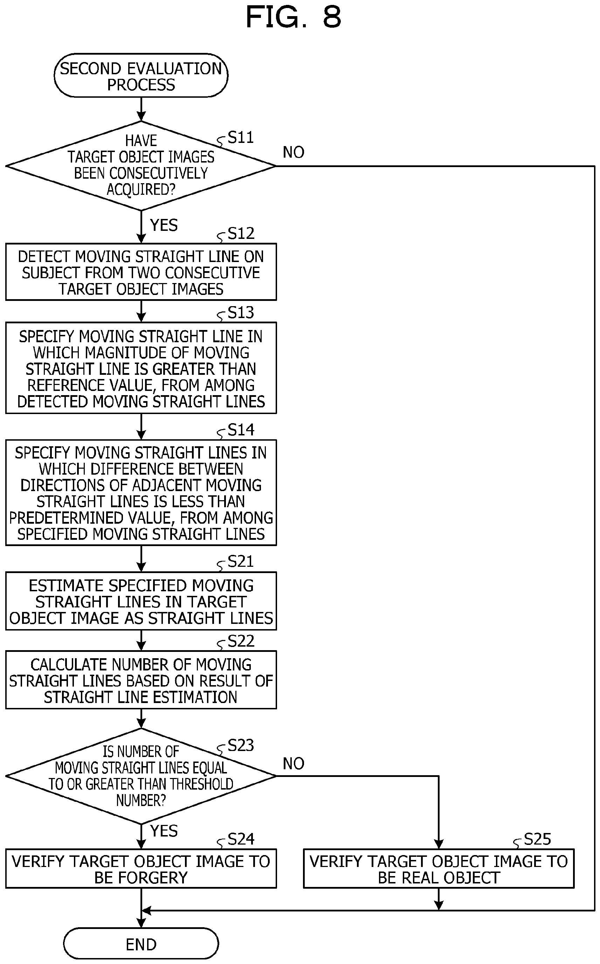

FIG. 8 is a flowchart illustrating an example of a processing action of the CPU 15 in the evaluation device 1A relating to a second evaluation process. In FIG. 8, the specifying unit 151C in the CPU 15 executes the process in step S14 to specify the moving straight lines X2 in which the difference between the directions of the adjacent moving straight lines is less than a predetermined value, from among the specified moving straight lines X1. The specifying unit 151C estimates the moving straight lines X2 specified in step S14 in the target object image 105 as straight lines (step S21).

The specifying unit 151C calculates the number of moving straight lines X4 estimated as straight lines in the target object image 105, based on the result of straight line estimation (step S22). The evaluation unit 151D determines whether or not the calculated number of moving straight lines X4 is equal to or greater than the threshold number (step S23).

When the number of moving straight lines X4 is equal to or greater than the threshold number (step S23: Yes), the evaluation unit 151D determines that the target object image 100 is a forgery (step S24) and terminates the processing action illustrated in FIG. 8.

When the number of moving straight lines X4 is not equal to or greater than the threshold number (step S23: No), the evaluation unit 151D determines that the target object image 100 is the real object (step S25) and terminates the processing action illustrated in FIG. 8. Then, when the target object image 100 is verified to be the real object, the control unit 15E will start biometric authentication using the target object on the target object image 100.

The evaluation device 1A detects the moving straight lines X at each position on the subject from the consecutive preceding and succeeding target object images 100 and specifies the moving straight lines X2 in which the magnitude of the moving straight line is greater than the reference value and the difference between the directions of adjacent moving straight lines is less than a predetermined value, from among the detected moving straight lines X. The evaluation device 1A estimates the specified moving straight lines X2 as straight lines and calculates the number of moving straight lines X4 estimated as straight lines. The evaluation device 1A verifies the target object image 100 to be a forgery when the number of moving straight lines X4 in the target object image 100 is equal to or greater than the threshold number. Furthermore, the evaluation device 1A verifies the target object image 100 to be the real object when the number of moving straight lines X4 in the target object image 100 is less than the threshold number. As a result, highly accurate forgery determination is enabled even when the background includes many straight lines. In addition, for example, when an image captured with high image quality and presented on a high-brightness and high-resolution display is captured by the camera 11, the captured target object image may be identified as a forgery.

Note that, for convenience of explanation, the case where the evaluation device 1 (1A) detects the moving straight line X from two consecutive preceding and succeeding target object images 100 has been taken as an example. However, besides two target object images, the moving straight lines X2 in which the magnitude of the moving straight line is greater than the reference value and the difference between the directions of adjacent moving straight lines is less than a predetermined value may be detected from a pair of preceding and succeeding target object images among three or more target object images, for each pair. The target object images may be evaluated for each pair, based on the distribution of the moving straight lines X2 detected for each pair, to aggregate the evaluation results for each pair, and the target object images may be evaluated based on this aggregation result. As a result, even more highly accurate forgery determination may be implemented.

The case where the evaluation device 1 (1A) specifies the moving straight lines in which the magnitude of the moving straight line is greater than the reference value and the difference between adjacent moving straight lines is less than a predetermined value and, based on the distribution of the specified moving straight lines, determines whether or not the target object image is a forgery has been taken as an example. However, it may be determined whether or not the target object image is forged, based on the distribution of moving straight lines in which the magnitude of the moving straight line is greater than the reference value.

The case of detecting the moving straight line from the preceding and succeeding target object images captured by the built-in camera 11 has been taken as an example, but the evaluation device 1 (1A) receives the preceding and succeeding target object images captured by an external camera capable of communication connection. Furthermore, the evaluation device 1 (1A) may detect the moving straight line from the received preceding and succeeding target object images and can be changed as appropriate.

In addition, the case where the evaluation device 1 (1A) is applied to a biometric authentication device that executes biometric authentication using the target object on the target object image when the target object image is the real object has been taken as an example. The biometric authentication device may be, for example, a device that executes biometric authentication when logging in to equipment, biometric authentication for a kiosk terminal, biometric authentication when managing entry to and exit from a room, or biometric authentication when using an automated teller machine (ATM) at a bank and can be changed as appropriate.

Although the case where the evaluation device 1 (1A) is executed by a computer has been taken as an example, the evaluation device 1 (1A) may be executed by a cloud, and the moving straight line X may be detected from the preceding and succeeding target object images in the cloud. In addition, the evaluation device 1 (1A) may detect the moving straight line X from the preceding and succeeding target object images by a server device that manages a plurality of evaluation devices 1 (1A) instead of a computer and can be changed as appropriate.

In addition, the case where the evaluation device 1 (1A) specifies a plurality of moving straight lines X2 in which the magnitude of the detected moving straight line is greater than the reference value and the difference in the motion direction between adjacent moving straight lines is less than a predetermined value has been taken as an example. However, a cloud or a server device may specify a plurality of moving straight lines X2 in which the magnitude of the detected moving straight line is greater than the reference value and the difference in the motion direction between adjacent moving straight lines is less than a predetermined value and can be changed as appropriate.

The case where the evaluation device 1 determines whether or not the target object image captured by the camera 11 is the real object, based on the target area of the distribution of the specified plurality of moving straight lines X2 has been taken as an example. However, a cloud or a server device may determine whether or not the target object image captured by the camera 11 is the real object, based on the target area of the distribution of the specified plurality of moving straight lines X2 and can be changed as appropriate.

The case where the evaluation device 1A estimates the plurality of moving straight lines X2 specified on the target object image 100 as straight lines and calculates the number of moving straight lines X4 as a result of straight line estimation on the target object image 100 has been taken as an example. However, a cloud or a server device may estimate the plurality of moving straight lines X2 specified on the target object image 100 as straight lines and calculate the number of moving straight lines X4 as a result of straight line estimation on the target object image 100 and can be changed as appropriate.

The case where the evaluation device 1A determines whether or not the number of moving straight lines X4 on the target object image 100 is equal to or greater than the threshold number has been taken as an example. However, a cloud or a server device may determine whether or not the number of moving straight lines X4 on the target object image 100 is equal to or greater than the threshold number and can be changed as appropriate.

In addition, each of the constituent elements of each of the units illustrated in the drawings does not necessarily have to be physically configured as illustrated in the drawings. That is, specific forms of separation and integration of each of the units are not limited to the illustrated forms, and all or some of the units may be configured by being functionally or physically separated and integrated in any unit according to various loads, use situations, and the like.

Furthermore, all or any part of various processing functions performed in each of the devices may be executed by a CPU (or a microcomputer such as a micro processing unit (MPU) and a micro controller unit (MCU)). In addition, all or any part of the various processing functions may of course be executed by a program analyzed and executed by a CPU (or a microcomputer such as an MPU and an MCU) or hardware using wired logic.

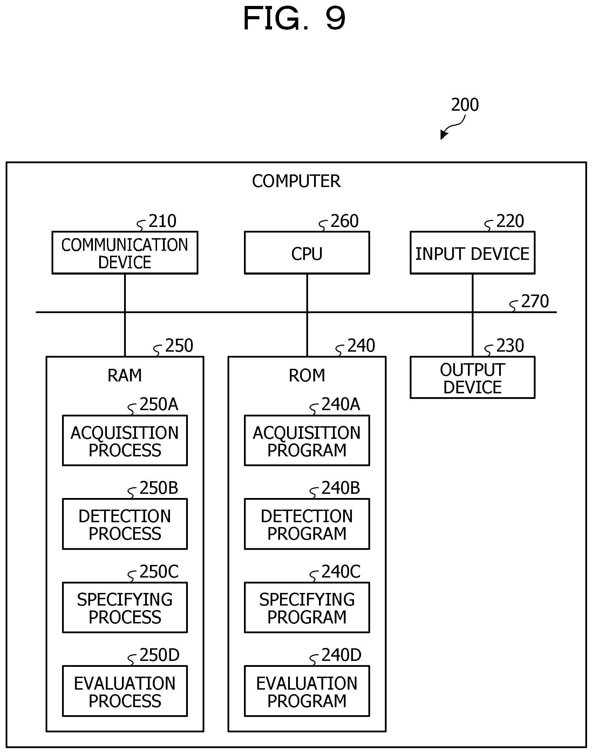

Incidentally, the various processes described in the present embodiments can be implemented by an information processing device such as a computer executing a program prepared in advance. Thus, in the following, an example of a computer that executes a program having functions similar to the functions of the above embodiments will be described. FIG. 9 is an explanatory diagram illustrating an example of a computer 200 that executes an evaluation program.

The computer 200 that executes the evaluation program illustrated in FIG. 9 includes a communication device 210, an input device 220, an output device 230, a ROM 240, a RAM 250, a CPU 260, and a bus 270. Note that the input device 220 includes a camera or the like that captures the target object.

Then, the ROM 240 stores in advance an evaluation program that exhibit functions similar to the functions of the above-described embodiments. Note that the evaluation program may be recorded on a recording medium readable by a drive (not illustrated) instead of the ROM 240. In addition, for example, a recording medium may be a portable recording medium such as a compact disc read only memory (CD-ROM), a digital versatile disc (DVD) disk, a universal serial bus (USB) memory, or a secure digital (SD) card, a semiconductor memory such as a flash memory, or the like. As illustrated in FIG. 9, the evaluation program contains an acquisition program 240A, a detection program 240B, a specifying program 240C, and an evaluation program 240D. Note that the programs 240A, 240B, 240C and 240D may be integrated or separated as appropriate.

Then, the CPU 260 reads these programs 240A, 240B, 240C, and 240D from the ROM 240 and loads each of these read programs into a work area of the RAM 250. Then, as illustrated in FIG. 9, the CPU 260 causes each of the programs 240A, 240B, 240C, and 240D loaded into the RAM 250 to function as an acquisition process 250A, a detection process 250B, a specifying process 250C, and an evaluation process 250D.

The CPU 260 acquires image data including a target object captured by a camera. The CPU 260 detects motions at each of a plurality of positions on a subject including the target object captured by the camera, based on the acquired image data. The CPU 260 specifies a plurality of the positions where the magnitude of the detected motions is greater than a reference value, from among the plurality of positions on the subject. The CPU 260 performs evaluation as to the target object captured by the camera, based on distribution of the specified plurality of the positions on the image data. As a result, highly accurate forgery determination is enabled.

### REFERENCE SIGNS LIST

- 1: evaluation device
- 15A: acquisition unit
- 15B: detection unit
- 15C: specifying unit
- 15D: evaluation unit
- 151C: specifying unit
- 151D: evaluation unit

## Claims

1. An evaluation method executed by a computer, the evaluation method comprising:
acquiring image data that includes a target object captured by a camera;
detecting motions at each of a plurality of positions on a subject that includes the target object captured by the camera, based on the acquired image data;
specifying a plurality of the positions where magnitude of the detected motions is greater than a reference value, from among the plurality of positions on the subject; and
performing evaluation as to the target object captured by the camera, based on distribution of the specified plurality of the positions on the image data.

2. The evaluation method according to claim 1, wherein
the detecting includes detecting moving straight lines as the motions at each of the plurality of positions on the subject that includes the target object,
the specifying includes specifying a plurality of the moving straight lines in which the magnitude of the detected moving straight lines is greater than the reference value, and
the performing includes performing the evaluation as to the target object captured by the camera, based on the distribution of the specified plurality of the moving straight lines on the image data.

3. The evaluation method according to claim 2, wherein the specifying includes specifying the plurality of the moving straight lines in which the magnitude of the detected moving straight lines is greater than the reference value and a difference in a motion direction between adjacent moving straight lines is less than a predetermined value.

4. The evaluation method according to claim 2 or 3, wherein the performing includes performing the evaluation as to the target object captured by the camera, based on the distribution of the specified plurality of the moving straight lines.

5. The evaluation method according to claim 2 or 3, wherein the performing includes performing the evaluation as to the target object captured by the camera, based on a number of the specified plurality of the moving straight lines.

6. The evaluation method according to any one of claims 1 to 3, wherein the detecting includes detecting the motions at each of the plurality of positions on the subject that includes the target object captured by the camera, based on consecutive preceding and succeeding pieces of the acquired image data.

7. The evaluation method according to any one of claims 1 to 3, wherein the performing includes performing the evaluation as to whether or not the target object is a real object.

8. An information processing device comprising:
an acquisition unit that acquires image data that includes a target object captured by a camera;
a detection unit that detects motions at each of a plurality of positions on a subject that includes the target object captured by the camera, based on the acquired image data;
a specifying unit that specifies a plurality of the positions where magnitude of the detected motions is greater than a reference value, from among the plurality of positions on the subject; and
an evaluation unit that performs evaluation as to the target object captured by the camera, based on distribution of the specified plurality of the positions on the image data.

9. The information processing device according to claim 8, wherein
the detection unit detects moving straight lines as the motions at each of the plurality of positions on the subject that includes the target object,
the specifying unit specifies a plurality of the moving straight lines in which the magnitude of the detected moving straight lines is greater than the reference value, and
the evaluation unit performs the evaluation as to the target object captured by the camera, based on the distribution of the specified plurality of the moving straight lines on the image data.

10. The information processing device according to claim 9, wherein the specifying unit specifies the plurality of the moving straight lines in which the magnitude of the detected moving straight lines is greater than the reference value and a difference in a motion direction between adjacent moving straight lines is less than a predetermined value.

11. The information processing device according to claim 9 or 10,
wherein the evaluation unit performs the evaluation as to the target object captured by the camera, based on the distribution of the specified plurality of the moving straight lines.

12. The information processing device according to claim 9 or 10, wherein the evaluation unit performs the evaluation as to the target object captured by the camera, based on a number of the specified plurality of the moving straight lines.

13. The information processing device according to any one of claims 8 to 10, wherein the detection unit detects the motions at each of the plurality of positions on the subject that includes the target object captured by the camera, based on consecutive preceding and succeeding pieces of the acquired image data.

14. The information processing device according to any one of claims 8 to 10, wherein the evaluation unit performs the evaluation as to whether or not the target object is a real object.

15. An evaluation program that causes a computer to execute a process, the process comprising:
acquiring image data that includes a target object captured by a camera;
detecting motions at each of a plurality of positions on a subject that includes the target object captured by the camera, based on the acquired image data;
specifying a plurality of the positions where magnitude of the detected motions is greater than a reference value, from among the plurality of positions on the subject; and
performing evaluation as to the target object captured by the camera, based on distribution of the specified plurality of the positions on the image data.

16. The evaluation program according to claim 15, wherein
the detecting includes detecting moving straight lines as the motions at each of the plurality of positions on the subject that includes the target object,
the specifying includes specifying a plurality of the moving straight lines in which the magnitude of the detected moving straight lines is greater than the reference value, and
the performing includes performing the evaluation as to the target object captured by the camera, based on the distribution of the specified plurality of the moving straight lines on the image data.

17. The evaluation program according to claim 16, wherein the specifying includes specifying the plurality of the moving straight lines in which the magnitude of the detected moving straight lines is greater than the reference value and a difference in a motion direction between adjacent moving straight lines is less than a predetermined value.

18. The evaluation program according to claim 16 or 17, wherein the performing includes performing the evaluation as to the target object captured by the camera, based on the distribution of the specified plurality of the moving straight lines.

19. The evaluation program according to claim 16 or 17, wherein the performing includes performing the evaluation as to the target object captured by the camera, based on a number of the specified plurality of the moving straight lines.

20. The evaluation program according to any one of claims 15 to 17, wherein the detecting includes detecting the motions at each of the plurality of positions on the subject that includes the target object captured by the camera, based on consecutive preceding and succeeding pieces of the acquired image data.
